# EUROPEAN PATENT SPECIFICATION

(11) **EP 2 392 696 B1**
(45) Date of publication and mention of the grant of the patent: **12.11.2014**
(21) Application number: 10735698.2
(22) Date of filing: 13.01.2010
(51) Int. Cl.: C25D 15/00, H01L 21/312, H01L 21/316

(54) **METHOD FOR FIRMLY FIXING PARTICLES, AND METHOD FOR PRODUCING STRUCTURE HAVING FIRMLY FIXED PARTICLES**
VERFAHREN ZUR FESTFIXIERUNG VON PARTIKELN UND VERFAHREN ZUR HERSTELLUNG EINES STRUKTUR MIT FESTFIXIERTEN PARTIKELN
PROCÉDÉ DE FIXATION FERME DE PARTICULES ET PROCÉDÉ DE FABRICATION D'UNE STRUCTURE AYANT DES PARTICULES FIXÉES FERMEMENT

(30) Priority: 02.02.2009 JP 2009021840
(43) Date of publication of application: 07.12.2011
(73) Proprietor: NGK Insulators, Ltd., Nagoya-city, Aichi 467-8530 (JP)
(72) Inventor: KOIZUMI, Takaaki, Nagoya-city Aichi 467-8530 (JP)
(74) Representative: Paget, Hugh Charles Edward
(86) International application number: PCT/JP2010/050273
(87) International publication number: WO 2010/087228

(56) References cited:
- JP-A- 11 012 776
- JP-A- 61 190 871
- JP-A- 2000 273 671
- HO K C ET AL: "Amperometric detection of morphine based on poly(3,4-ethylenedioxythiophene) immobilized molecularly imprinted polymer particles prepared by precipitation polymerization", ANALYTICA CHIMICA ACTA, ELSEVIER, AMSTERDAM, NL, vol. 542, no. 1, 22 June 2005 (2005-06-22) , pages 90-96, XP004913181, ISSN: 0003-2670, DOI: 10.1016/J.ACA.2005.02.036
- J.-L. Besombes ET AL: "Improvement of the analytical characteristics of an enzyme electrode for free and total cholesterol via laponite clay additives", Analytica Chimica Acta, vol. 317, no. 1-3, 1 December 1995 (1995-12-01), pages 275-280, XP055052350, ISSN: 0003-2670, DOI: 10.1016/0003-2670(95)00392-4

## Description

### Technical Field

The present invention relates to a method for immobilizing particles as well as a method for producing particle-immobilized substrates.

### Background Art

A method is proposed in the art in which a multilayer film that does not easily peel from a substrate is prepared by forming a film having a chemical group that can be easily immobilized on the substrate on the substrate by the Langmuir-Blodgett technique (LB technique) and further forming a plurality of films of different materials on the film formed on the substrate (see, for example, Patent Document 1). Also proposed is a method in which a polymer is formed on an electrode with magnetic microparticles dispersed in the polymer by immersing the electrode in a solution having a polymerizable monomer and magnetic microparticles dispersed therein and electropolymerizing the monomer (see, for example, Patent Document 2). This method allows a thin film with low density and high flexibility to be formed.
Patent Document 1: JP 2006-150661 A
Patent Document 2: JP 06-338432 A

HO K C ET AL: "Amperometric detection of morphine based on poly(3,4-ethylenedioxythiophene) immobilized molecularly imprinted polymer particles prepared by precipitation polymerization", ANALYTICA CHIMICA ACTA, ELSEVIER, AMSTERDAM, NL, vol. 542, no. 1, 22 June 2005 (2005-06-22), pages 90-96,describes synthesis of molecular imprinted polymers (MIPs) for a target molecule, morphine, using a precipitation polymerization method. A conducting polymer, poly(3.4-ethylenedioxythiophene) (PEDOT), is utilized to immobilise the MIP particles onto an indium tin oxide (ITO) glass as a MIP/PEDOT-modified electrode.

After formation of the MIP particles using a morphine template, the ITO glass electrode is immersed in a solution containing the MIP particles and PEDOT. A platinum counter electrode is used for electropolymerization.

J.-L. Besombes ET AL: "Improvement of the analytical characteristics of an enzyme electrode for free and total cholesterol via laponite clay additives", Analytica Chimica Acta, vol. 317, no. 1-3, 1 December 1995 (1995-12-01), pages 275-280, describes the electropolymerization of a laponite nanoparticle-amphiphilic pyrrole derivative-enzyme mixture preadsorbed on an electrode surface.

First, a monomer is dispersed in water. Separately, laponite particles are dispersed in water. Then the two aqueous solutions are mixed. The mixture is deposited on the surface of a platinum electrode and dried under vacuum. Next, the platinum electrode is put into a cell containing a solution of LiClO₄. Polymerization of the monomer is performed.

### Disclosure of Invention

When, for example, a particle layer is to be formed only on an electrode formed on a substrate, it may be desirable to firmly immobilize the particles on the electrode for ease of handling in the subsequent steps. In such cases, with the method of Patent Document 1, a particle layer in film form is formed not only on the electrode, but also on the other portion of the substrate; therefore, another method in which no particle layer is formed on the substrate, such as pattering with a mask or patterning with a resist, needs to be performed. In addition, the range of options, including the chemical groups formed on the substrate and the film, is limited. Immobilization of LB films is basically due to a bond formed by intermolecular force, which is weak and cannot immobilize particles on an electrode sufficiently firmly, particularly when the particle size exceeds the submicron order. In the method of Patent Document 2, on the other hand, a polymer layer is formed on an electrode, although the method forms a highly flexible polymer layer on an electrode, rather than firmly immobilizes particles on an electrode.

A primary object of the present invention, which has been made in light of such problems, is to provide a method for immobilizing particles and a method for producing a particle-immobilized substrate that allow particles to be immobilized on an electrode more easily and more firmly.

As a result of intensive research for achieving the above primary object, the present inventors have found that particles can be immobilized on an electrode more easily and more firmly by forming a particle layer on a substrate having an electrode formed thereon and then forming a polymer on the electrode by electropolymerization using the electrode, thus completing the present invention.

A method of the present invention for immobilizing particles is:
a method for immobilizing particles on a first electrode formed on a substrate, including:
   a forming step of forming a particle layer at least on the first electrode; and
   a subsequent immobilizing step of immobilizing the particle layer by immersing the substrate in a solution containing an electropolymerizable chemical while a counter electrode is disposed opposite the first electrode with the particle layer formed on the first electrode and applying a potential difference between the first electrode and the counter electrode to electropolymerize the chemical on the first electrode.

In addition, a method of the present invention for producing a particle-immobilized substrate is:
a method for producing a particle-immobilized substrate having particles immobilized on a first electrode formed on the substrate, including:
   a forming step of forming a particle layer at least on the first electrode; and
   a subsequent immobilizing step of immobilizing the particle layer by immersing the substrate in a solution containing an electropolymerizable chemical while a counter electrode is disposed opposite the first electrode with the particle layer formed on the first electrode and applying a potential difference between the first electrode and the counter electrode to electropolymerize the chemical on the first electrode.

In the method of the present invention for immobilizing particles and the method of the present invention for producing a particle-immobilized substrate, the particles can be more firmly immobilized because the particles are mechanically immobilized by the polymer formed on the first electrode by electropolymerization. In addition, even if the particle layer is formed in the region on the substrate other than the first electrode, the particle layer can be easily removed from the region other than the first electrode without performing, for example, pattering with a mask or patterning with a resist, as in the known art, because the chemical is electropolymerized on the first electrode and the particles are not firmly immobilized in the region other than the first electrode. Accordingly, the particles can be more easily and more firmly immobilized on the electrode.

### Brief Description of Drawings

Fig. 1 is an explanatory diagram showing an example of a method of this embodiment for producing a particle-immobilized substrate 10.
Fig. 2 is an explanatory diagram showing another example of the method of this embodiment for producing the particle-immobilized substrate 10.
Fig. 3 is an explanatory diagram illustrating a series of steps of producing a stack 50.
Fig. 4 shows explanatory diagrams of other examples of the particle-immobilized substrate 10: Fig. 4(a) shows an example with a multilayer pattern of cubic particles; Fig. 4(b) shows an example with a monolayer pattern of cubic particles; Fig. 4(c) shows an example with ceramic particles combined by firing; and Fig. 4(d) shows an example with a pattern of immobilized layer 34 based on an electrode pattern.

### Preferred Embodiments for Carrying Out the Invention

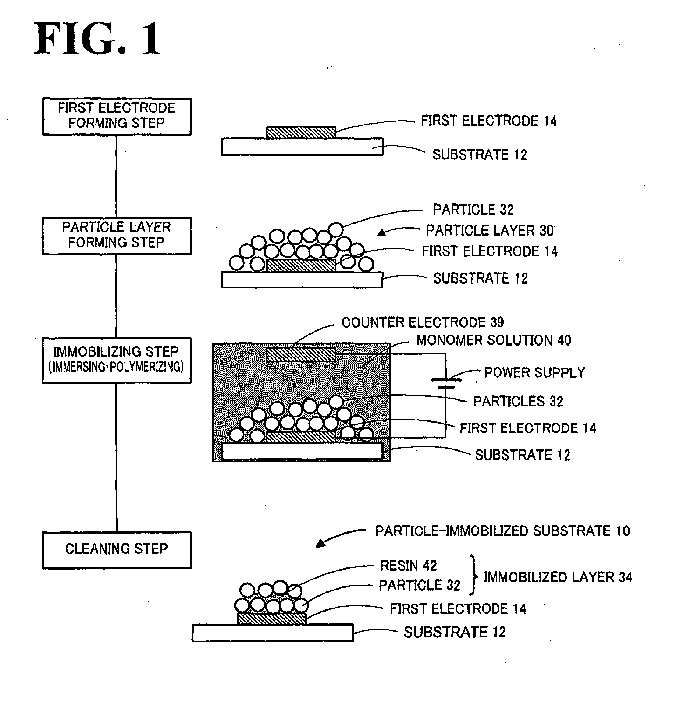

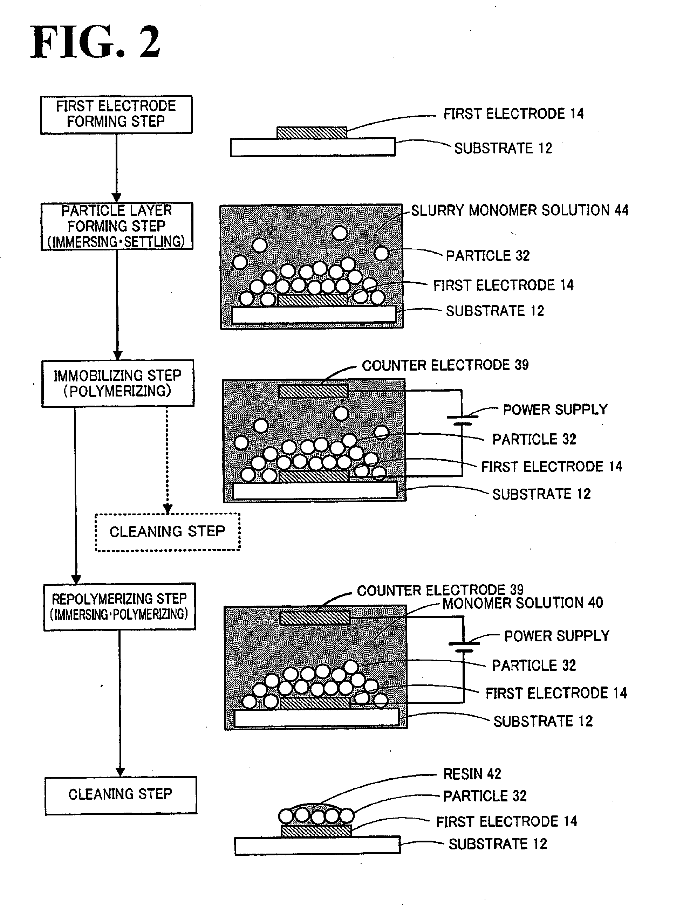

An embodiment of the present invention will now be described with reference to the drawings. Figs. 1 and 2 are explanatory diagrams showing examples of a method of this embodiment for producing a particle-immobilized substrate 10. As shown in the bottom stage of Fig. 1, the particle-immobilized substrate 10 includes a substrate 12, a first electrode 14 formed on the substrate 12, and an immobilized layer 34 formed on the first electrode 14 and having particles 32 immobilized with a resin 42. The particle-immobilized substrate 10 may be fabricated, for example, as an intermediate (part) to a device having an electrode formed on a substrate. The particle-immobilized substrate 10 may be a substrate including an electrode on which particles having properties such as piezoelectric properties, ferroelectric properties, magnetic properties, thermoelectric properties, ion conductivity, or optical properties are immobilized. That is, examples of devices include piezoelectric/electrostrictive devices, ferroelectric devices, magnetic devices, thermoelectric transducers, ion-conductive devices, and optical devices. In addition, this particle-immobilized substrate 10 may be used as-is or may be fabricated, for example, as an intermediate to a device having another electrode formed on the immobilized layer 34. That is, the particle-immobilized substrate 10 may be fabricated as a device having a structure in which a layer of particles is held between electrodes, examples of which include piezoelectric/electrostrictive devices, ferroelectric devices, thermoelectric transducers, and ion-conductive devices. In this case, the first electrode 14 formed on the substrate 12 can be used as-is for such devices.

The substrate 12 may be any substrate having an insulating surface on which a conductive electrode can be formed, such as one or more of glass, single crystal, ceramic, resin, and insulator-coated metal substrates. Examples of glass substrates include quartz and alkali-free glass. Examples of single crystal substrates include silicon, gallium arsenide, silicon carbide, and alumina. Examples of ceramic substrates include stabilized zirconium oxide, aluminum oxide, magnesium oxide, mullite, aluminum nitride, and silicon nitride. Examples of resin substrates include epoxy resins and polyester resins. Examples of insulator-coated metal substrates include metals, such as stainless steel and aluminum, coated with an insulating resin.

The first electrode 14 is formed of a conductive material. The material of the first electrode 14 may be at least one or more selected from the group consisting of platinum, palladium, ruthenium, gold, silver, alloys thereof, and conductive polymers. In the case where the particle-immobilized substrate 10 is to be fired later, platinum or an alloy mainly containing platinum is preferred as the material of the first electrode 14 because it has high heat resistance in firing. In addition, the pattern of the first electrode 14 may be formed by any method such as evaporation, sputtering, screen printing, electroless plating, or interfacial monomer polymerization.

The particles 32 may be formed of, for example, glass, ceramic, resin, or insulator-coated metal. Preferably, the particles 32 have insulation properties so that the monomer of the resin 42 is electropolymerized at the interface of the first electrode 14. More preferably, for example, the particles 32 are ones that exhibit improved properties when aligned or oriented on the first electrode 14. In this case, the properties of the immobilized layer 34 can be further improved by the method of the present invention for immobilizing particles. The particles 32 used may be, for example, one or more of particles having piezoelectric properties, particles having ferroelectric properties, particles having magnetic properties, particles having thermoelectric properties, particles having ion conductivity, and particles having optical properties. Particles having such properties can deliver the same properties in, for example, the resulting particle-immobilized substrate 10 or device. Examples of particles having piezoelectric properties include lead zirconate titanate (PZT: Pb(Zr,Ti)O₃), lithium niobate (LiNb0₃), lithium tantalate (LiTa0₃), quartz crystal (Si0₂), zinc oxide (ZnO), lithium tetraborate (Li₂B₄0₇), langasite (La₃Ga₅Si0₁₄), aluminum nitride (AlN), and polyvinylidene fluoride (PVDF). Examples of particles having ferroelectric properties include BaTi0₃, Pb(Zr,Ti)O₃ (PZT), SrBi₂Ta₂O₉ (SBT), (Bi,La)₄Ti₃O₁₂ (BLT), and BaBi₄Ti₄O₁₄. Examples of particles having magnetic properties include ferrite (FeO·Fe₂O₃, MnO·Fe₂O₃, NiO·Fe₂O₃, and CoO·Fe₂O₃. Examples of particles having thermoelectric properties include bismuth-tellurium compound, lead-tellurium alloy, silicon-germanium alloy, cobalt-antimony compound, and zinc-antimony compound. Examples of particles having ion conductivity include stabilized zirconia, β-alumina, and perfluorosulfonic acid polymers. Examples of particles having optical properties include particles containing one of indium oxide, zinc oxide, and tin oxide, such as Zn-In-Sn-O-based materials, Zn-In-O-based materials, In-Sn-O-based materials, and Zn-In-Sn-O-based materials. The particles 32 may be formed in various shapes, including a sphere, cube, tetrahedron, octahedron, bar, and plate. Among others, a sphere, cube, tetrahedron, and octahedron are preferred to form a dense body because they allow the filling factor of the particles to be increased.

The resin 42, which is formed by electropolymerization, may be a polymer of, for example, a vinyl monomer such as styrene or N-vinylcarbazole, an aromatic ring compound such as aniline or phenol, or a heterocyclic compound such as pyrrole, thiophene, or furan. Examples of electropolymerization include polymerization reaction caused through the formation of radical cations or radical anions, polymerization reaction caused by reactive species such as cations, anions, or free radicals formed by oxidation or reduction of a coexisting supporting electrolyte or additive, and chain polymerization or successive polymerization depending on the type of monomer. Of these, the resin 42 is preferably a polymer of, for example, pyrrole, an alkylpyrrole, aminopyrrole, aniline, thiophene, an alkylthiophene, or a thiophene derivative. The resin 42 may also be a polymer formed by adding a sodium alkylbenzenesulfonate such as sodium p-toluenesulfonate, sodium ethylbenzenesulfonate, or sodium dodecylbenzenesulfonate as an oxidant to induce electropolymerization.

Next, the method for producing the particle-immobilized substrate 10 will be described. For example, as shown in Fig. 1, the method for producing the particle-immobilized substrate 10 can include (1) a first-electrode forming step of forming the first electrode 14 on the substrate 12, (2) a particle-layer forming step of forming the particle layer 30 on the first electrode 14, (3) and a subsequent immobilizing step of immobilizing the particle layer 30 on the first electrode 14, and (4) a cleaning step of cleaning off the particles 32 from the region on the substrate 12 other than the first electrode 14. Alternatively, as shown in Fig. 2, the method for producing the particle-immobilized substrate 10 can include (1) the electrode-forming step, (2) a particle-layer forming step of forming the particle layer 30 by immersing the substrate 12 in a slurry monomer solution 44 containing the particles 32 and the monomer of the resin 42, (3) and a subsequent immobilizing step of forming the resin 42 on the first electrode 14 in the slurry monomer solution 44 by electropolymerization, (4) the cleaning step, and (5) after the immobilizing step and before the cleaning step, a repolymerizing step of immersing the substrate 12 after the immobilizing step in a monomer solution 40 containing an electropolymerizable monomer and further forming the resin 42 on the first electrode 14 by electropolymerization.

### (1) First-Electrode Forming Step

First, a process in which the first electrode 14 is formed on the substrate 12 is performed (the first stage of Fig. 1). The substrate 12 on which the first electrode 14 is to be provided may be formed of, for example, glass, single crystal, ceramic, resin, or insulator-coated metal, as described above. The first electrode 14 may be formed of one or more of conductive inorganic compounds such as metals and oxides and conductive polymers as described above. The first electrode 14 may be formed by, for example, evaporation, sputtering, or monomer polymerization reaction of the electrode material. The first electrode 14 can also be formed in the desired pattern on the substrate 12 by preparing a paste of the electrode material and coating the substrate 12 with the paste by, for example, doctor blade coating or screen printing, or by electroless plating. The shape and thickness of the first electrode 14 may be appropriately selected.

### (2) Particle-Layer Forming Step

Next, the particle layer 30, which is a layer of the particles 32, is formed at least on the first electrode 14 formed on the substrate 12 having the first electrode 14 formed thereon. The particles 32 used may be formed of, for example, glass, ceramic, resin, or insulator-coated metal, as described above. In addition, particles having piezoelectric/electrostrictive properties, particles having ferroelectric properties, particles having magnetic properties, particles having thermoelectric properties, particles having ion conductivity, or particles having optical properties may be used. The particle layer 30 may be formed by any method that forms one that can be subjected to the subsequent immobilizing step. For example, the particle layer 30 may be formed directly without immersing the substrate 12 in a solution, as shown in the second stage of Fig. 1, or may be formed on the first electrode 14 by immersing the substrate 12 in a solution (slurry) containing the particles 32, as shown in the second stage of Fig. 2. The former method may be, for example, one or more of spray coating, spin coating, and doctor blade coating. The latter method may be, for example, one or more of a method in which the substrate 12 is immersed and left standing in a slurry having the particles 32 dispersed therein until they settle down, the LB technique, in which the substrate 12 is immersed in and lifted out of the liquid phase with the particles 32 aligned at the interface thereof, electrophoresis, and dipping. Such methods allow the particle layer 30 to be relatively easily formed on the first electrode 14. Of these, the method in which the substrate 12 is immersed in a slurry until the particles 32 settle down is preferably used because the subsequent immobilizing step (electropolymerization of polymer) can be easily entered. The particle layer 30 can be more densely filled by applying, for example, mechanical vibrations, acoustic waves, heat, light, or a magnetic field during the formation thereof. In addition, because the particle layer 30 is immersed in a solution in the immobilizing step, it may be strengthened by drying or heating after the formation thereof.

### (3) Immobilizing Step

Next, a process is performed in which the immobilized layer 34 having the particle layer 30 immobilized therein is formed by immersing the substrate 12 in the monomer solution 40 containing the electropolymerizable chemical (monomer) while a counter electrode 39 is disposed opposite the first electrode 14 with the particle layer 30 formed on the first electrode 14 and applying a potential difference between the first electrode 14 and the counter electrode 39 to electropolymerize the monomer on the first electrode 14. By electropolymerizing the monomer on the first electrode 14, the particles 32 can be immobilized only on the first electrode 14. At this time, for example, as shown in Fig. 2, the particle layer 30 may be formed in the particle-layer forming step by immersing the substrate 12 in the slurry monomer solution 44 containing the particles 32 and the electropolymerizable monomer and may then be immobilized with the resin 42 in the immobilizing step by electropolymerizing the monomer on the first electrode 14 in the slurry monomer solution 44. This is preferable in that the immobilizing step can be performed immediately after the formation of the particle layer 30 and is therefore easier to perform. Alternatively, for example, the particle layer 30 may be formed on the first electrode 14 in the particle-layer forming step by immersing and lifting the substrate 12 in and out of the slurry monomer solution 44 with the particles 32 floating in film form in the surface thereof while the counter electrode 39 is disposed opposite the first electrode 14 and may then be immobilized with the resin 42 in the immobilizing step by applying a potential difference between the first electrode 14 and the counter electrode 39 to electropolymerize the monomer on the first electrode 14 when the substrate 12 is lifted. By doing so, the formation of the particle layer 30 and the immobilization of the particles 32 can be performed substantially at the same timing to form a relatively thin particle layer. In the present invention, the immobilization of the particles 32 is performed subsequent to the forming the particle layer.

Here, the monomer solution 40 may be a solution in which an electropolymerizable monomer is dissolved and/or dispersed. As described above, the monomer used may be a vinyl monomer, aromatic ring compound, or heterocyclic compound, and is preferably, for example, pyrrole, an alkylpyrrole, aminopyrrole, aniline, thiophene, an alkylthiophene, or a thiophene derivative. The solvent used may be appropriately selected from water and organic solvents, depending on the monomer. In particular, an aqueous pyrrole solution is preferably used because it can be handled as a solvent. In addition, a sodium alkylbenzenesulfonate such as sodium p-toluenesulfonate, sodium ethylbenzenesulfonate, or sodium dodecylbenzenesulfonate may be added to the solution as an oxidant to induce electropolymerization. The electropolymerization may be performed by disposing a counter electrode in the monomer solution 40 and controlling, for example, the electrical conditions (voltage and current) and the treatment time depending on the diameter of the particles immobilized and the thickness and size of the particle layer. In this way, the immobilized layer 34 having the particles 32 immobilized with the resin 42 formed by electropolymerization can be formed on the first electrode 14. The immobilized layer 34 is more firmly formed on the first electrode 14 because the resin 42 mechanically immobilizes the particles 32 by filling the gaps therebetween.

### (4) Cleaning Step

Next, a process is performed in which the particle layer 30 is removed from the region other than the first electrode 14 on the substrate 12 on which the immobilized layer 34 is formed. The particles not immobilized with the resin 42 formed by electropolymerization can be removed by running water cleaning or supersonic cleaning. In this way, the particle-immobilized substrate 10 having the particles 32 immobilized on the first electrode 14 with the resin 42 can be obtained by an easier process.

### (5) Repolymerizing Step

As shown in the fourth stage of Fig. 2, after the immobilizing step and before the cleaning step, a process may be performed in which the monomer is electropolymerized again by immersing the substrate 12 having the particle layer 30 formed thereon in the solution containing the monomer but not containing the particles 32 and applying a potential difference between the first electrode 14 and the counter electrode 39. By doing so, more polymer can be formed in the immobilized layer 34, thus allowing the upper layer of particles 32 to be easily removed to obtain a particle-immobilized substrate 10 having an immobilized layer 34 including a monolayer of particles 32 formed on the first electrode 14. When, for example, particles 32 of submicrons to several microns in size are immobilized with a conductive polymer, electropolymerization can be performed again in a conductive monomer solution to form an immobilized layer 34 including a monolayer of particles 32. The cleaning step described above may be performed after the repolymerizing step, or may be performed before and after the repolymerizing step.

In the method for producing the particle-immobilized substrate 10 of this embodiment described in detail above, because the particles 32 are mechanically immobilized with the resin 42 formed by electropolymerization of the resin 42, the immobilized layer 34 is firmer, and the range of options of the types of substrate 12, first electrode 14, and particles 32 can be significantly broadened. In addition, the use of electropolymerization provides an easier process for forming the immobilized layer 34 only on the first electrode 14 without performing, for example, pattering with a mask or patterning with a resist, as in the known art. In addition, because the immobilized layer 34 is formed by electropolymerization after the formation of the particle layer 30 on the first electrode 14, a denser immobilized layer 34 can be formed. In addition, the first electrode 14 can be used to form the immobilized layer 34 and later, for example, to form a device having the immobilized layer 34 held between a plurality of electrodes. In this embodiment, an example of a method of the present invention for immobilizing particles also becomes apparent from the description of the method for producing the particle-immobilized substrate 10.

It is to be understood that the present invention is not limited to the embodiment described above in any aspect, but can be practiced in various manners within the technical scope of the present invention.

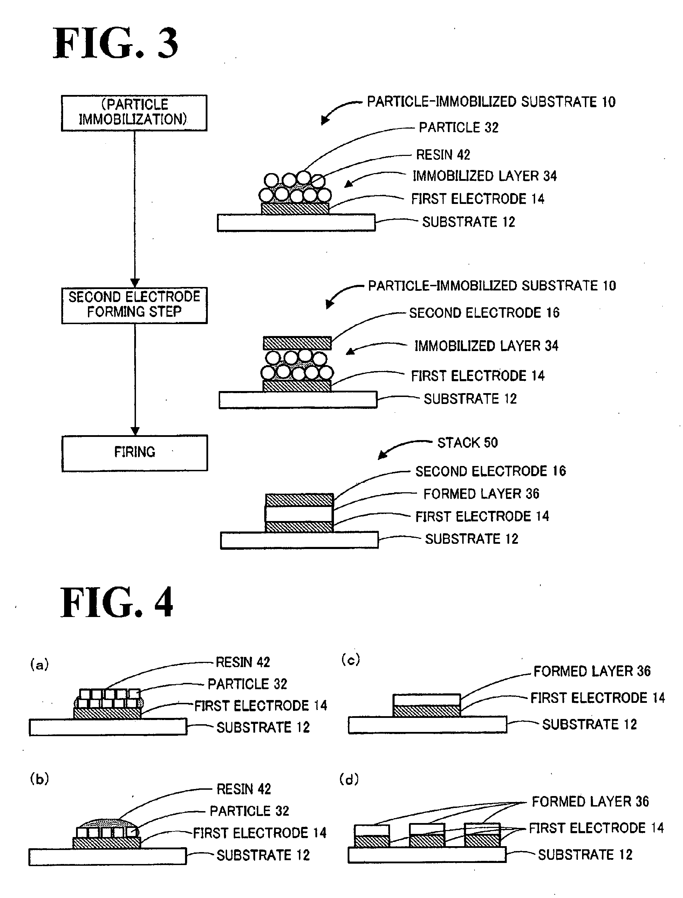

For example, whereas the method of the embodiment described above is a method for producing the particle-immobilized substrate 10 having the immobilized layer 34 formed on the first electrode 14, it may include, as shown in Fig. 3, (6) a second-electrode forming step of forming a second electrode 16 on the immobilized layer 34 of the particle-immobilized substrate 10 and (7) a firing step of firing the particle-immobilized substrate 10 having the second electrode 16 formed thereon. That is, the method may be a method for producing a stack 50 (device) having a formed layer 36 held between the first electrode 14 and the second electrode 16. Fig. 3 is an explanatory diagram illustrating the series of steps of producing the stack 50. In the second-electrode forming step, the same process as the first-electrode forming step described above can be used. In addition, in the firing step, firing is performed under the conditions matching the properties of the substrate 12, the first electrode 14, the particles 32, the resin 42, etc. In the firing step, for example, the particle-immobilized substrate 10 may be fired at a temperature at which the particles 32 sinter or at a temperature at which the resin 42 disappears after the firing, and accordingly the materials of the substrate 12 and the first electrode 14 may be selected taking into account heat resistance. In addition, the firing step may be performed after the formation of the first electrode 14, after the formation of the immobilized layer 34, after the formation of the second electrode 16, or after one or more of those steps. By forming a first electrode 14 of a conductive polymer in the first electrode forming step on a substrate 12 that can be fired, providing thereon an immobilized layer 34 that can be fired, and firing the particle-immobilized substrate 10, the first electrode 14 disappears after the firing, thus leaving a stack having the formed layer 36 formed directly on the substrate 12 without the first electrode 14 therebetween.

Whereas the method of the embodiment described above for producing the particle-immobilized substrate 10 may include the electrode-forming step, the particle-layer forming step, the immobilizing step, the cleaning step, and the repolymerizing step, it may include only the particle-layer forming step and the immobilizing step.

Whereas the particle-immobilized substrate 10 has been described with reference to Figs. 1 and 2 in the embodiment described above, various forms may be employed, as shown in Fig. 4. Fig. 4 shows explanatory diagrams of other examples of the particle-immobilized substrate 10: Fig. 4(a) shows an example with a multilayer pattern of cubic particles; Fig. 4(b) shows an example with a monolayer pattern of cubic particles; Fig. 4(c) shows an example with ceramic particles combined by firing; and Fig. 4(d) shows an example with a pattern of immobilized layer 34 based on an electrode pattern. As shown, the particles 32 may be formed in a rectangular shape, may be formed either as a monolayer or as a multilayer, may be fired to form a ceramic layer, and may have a pattern such as an interdigital pattern.

### Examples

Actual examples of the particle-immobilized substrate 10 of the present invention will now be described.

### Example 1

A platinum pattern having a width of 1 mm, a length of 40 mm, and a thickness of 10 µm was formed on a zirconia substrate having a size of 30 mm × 30 mm and a thickness of 150 um by screen printing and was fired at 1,350°C using an electric furnace to form a platinum electrode (first electrode) on the substrate. In addition, an aqueous pyrrole solution was prepared by adding sodium dodecylbenzenesulfonate and pyrrole to 30 mL of pure water such that the concentration was 0.01 mol/L. The prepared aqueous solution was poured into a beaker, and 1% by weight of cubic PZT particles prepared by hydrothermal synthesis and having a particle size of 3 µm were added to the aqueous solution and were dispersed with a homogenizer to prepare a suspension (slurry monomer solution). The zirconia substrate described above was then placed on the bottom of the beaker containing the solution and was left standing for ten minutes until the PZT particles settled down. A stainless steel counter electrode was then disposed at an interelectrode distance of 1 mm parallel to the substrate, a power supply was connected such that the platinum electrode on the substrate was positive in polarity and the counter electrode was negative in polarity, and a triangular wave at 2 Hz with a peak voltage of 5 V was applied 30 times to synthesize polypyrrole on the platinum electrode. The substrate on which the polypyrrole was formed was shaken in the aqueous solution to roughly remove excess particles and was then subjected to ultrasonic cleaning in pure water to remove the PZT particles deposited in the region other than the platinum electrode. In this way, a particle-immobilized substrate having an immobilized layer including PZT particles immobilized in film form only on the platinum electrode was obtained as Example 1. The particle size of the PZT particles is the median size (D50) measured with the dynamic light scattering particle size analyzer Zetasizer Nano nano-ZS manufactured by Spectris Co., Ltd. using water as a dispersion medium. In addition, the ultrasonic cleaning for removing the PZT particles was performed using an ultrasonic cleaner (UT-106, manufactured by Sharp Corporation) at 40 kHz for one minute.

### Example 2

The PZT particles were immobilized by synthesizing polypyrrole on the platinum electrode as in Example 1, and the substrate was shaken in the aqueous solution to roughly remove excess particles. The substrate and a counter electrode disposed opposite the first electrode on the substrate were then immersed in another aqueous pyrrole solution having no PZT particles suspended therein, and a triangular wave at 2 Hz with a peak voltage of 5 V was applied 30 times to further synthesize polypyrrole on the particle-immobilized substrate. By cleaning the substrate with pure water after the synthesis, the PZT particles deposited in the region other than the platinum electrode and the particles deposited on the particles immobilized on the platinum electrode could be removed, thus obtaining a particle-immobilized substrate having a monolayer of PZT particles immobilized in film form only on the first electrode as Example 2.

### Example 3

A gold electrode (first electrode) having a width of 1 mm, a length of 40 mm, and a thickness of 150 nm was formed on a glass substrate having a size of 30 mm × 30 mm and a thickness of 2 mm by DC sputtering. In addition, an aqueous pyrrole solution was prepared by adding sodium dodecylbenzenesulfonate and pyrrole to 30 mL of pure water such that the concentration was 0.01 mol/L. The prepared aqueous solution was poured into a beaker, and 1% by volume of spherical polystyrene beads (3200A, manufactured by Moritex Corporation) having a particle size of 200 nm were added to the aqueous solution and were dispersed with a homogenizer to prepare a suspension (slurry monomer solution). The glass substrate described above was then placed on the bottom of the beaker containing the solution and was left standing for ten minutes until the polystyrene particles settled down. A stainless steel counter electrode was then disposed at an interelectrode distance of 1 mm parallel to the substrate, a power supply was connected such that the gold electrode on the substrate was negative in polarity and the counter electrode was positive in polarity, and a triangular wave at 2 Hz with a peak voltage of 5 V was applied 30 times to synthesize polypyrrole on the gold electrode. The substrate on which the polypyrrole was formed was shaken in the aqueous solution to roughly remove excess particles and was then subjected to ultrasonic cleaning in pure water as in Example 1 to remove the polystyrene particles deposited in the region other than the gold electrode. In this way, a particle-immobilized substrate having the spherical polystyrene beads immobilized in film form only on the gold electrode was obtained as Example 3.

### Example 4

A pair of opposing interdigital gold electrodes (first electrode and counter electrode) having a thickness of 150 nm was formed on a glass substrate having a size of 30 mm × 30 mm and a thickness of 2 mm by DC sputtering. In addition, an aqueous pyrrole solution was prepared by adding sodium dodecylbenzenesulfonate and pyrrole to 30 mL of pure water such that the concentration was 0.01 mol/L. One percent by volume of spherical polystyrene beads having a particle size of 200 nm were dispersed in isopropyl alcohol, and the dispersion was added dropwise to the aqueous pyrrole solution. Thus, the isopropyl alcohol was dissolved in water to allow the polystyrene beads to float in the surface of the aqueous pyrrole solution. As the glass substrate and the counter electrode were immersed in the aqueous solution and were lifted in an oblique direction, the polystyrene beads were lifted together with the substrate (LB technique). A power supply was connected such that one of the pair of gold electrodes on the substrate was negative in polarity and the other was positive in polarity, and a triangular wave at 2 Hz with a peak voltage of 5 V was applied when the substrate was lifted, thus immobilizing the spherical polystyrene beads in film form only on the interdigital gold electrodes. By cleaning the substrate with pure water after the synthesis, the PZT particles deposited in the region other than the gold electrodes and the particles deposited on the particles immobilized on the gold electrodes were removed, thus obtaining a particle-immobilized substrate as Example 4.

### Comparative Example 1

Cubic PZT particles prepared by hydrothermal synthesis and having a particle size of 3 µm were coated with latex, were suspended in isopropyl alcohol, and were added dropwise to pure water so as to float in the surface thereof. A glass substrate having gold electrodes formed thereon, prepared as in Example 4, was then lifted out of the solution in which the PZT particles floated (LB technique), thus obtaining a substrate having the PZT particles deposited thereon as Comparative Example 1.

### Peel Test

A test for evaluating Examples 1 to 4 and Comparative Example 1 for adhesion was carried out. The test evaluated the peel rate, where it was determined how the coverage of the particles on the first electrode before peel treatment changed after the peel treatment. The peel treatment was performed using the above ultrasonic cleaner in water at 40 kHz for one minute. In addition, the coverage (the proportion of the particles covering the electrode per unit area) was determined by examining the surface of the first electrode having the immobilized layer formed thereon using a scanning electron microscope (JSM-7000F, manufactured by JEOL Ltd.) and digitizing the area covered by the particles per electrode area by image analysis. In addition, the peel rate was determined by the expression (A-B)/A × 100(%), where A is the coverage of the particles on the first electrode before the peel treatment and B is the coverage after the peel treatment.

### Test Results

Table 1 shows the coverage (%) of the particles on the first electrode before the peel treatment, the coverage (%) after the peel treatment, and the peel rate (%) for Examples 1 to 4 and Comparative Example 1. As is obvious from Table 1, whereas the particle layer of Comparative Example 1 peeled off noticeably and was turned out to be unsuccessfully immobilized, the particle layer of any of the samples of Examples had high coverage and was turned out to be significantly resistant to peeling. In addition, it was assumed that the particles may be provided on the first electrode by any method, such as by allowing the particles to settle down on the electrode or by the LB technique. In addition, it turned out that the particles can be firmly immobilized irrespective of the materials of the particles, the substrate, and the electrode in the methods of Examples 1 to 4 for immobilizing particles on an electrode by electropolymerization. It also turned out that an immobilized monolayer can be easily formed by electropolymerization after the formation of an immobilized layer.

**Table 1**

| | Coverage A before peel treatment (%) | Coverage B after peel treatment (%) | Peel Rate after peel treatment (A-B)/A × 100(%) |
|---|---|---|---|
| EXAMPLE 1 | 96 | 94 | 2.1 |
| EXAMPLE 2 | 90 | 90 | 0.0 |
| EXAMPLE 3 | 92 | 91 | 1.1 |
| EXAMPLE 4 | 89 | 88 | 1.1 |
| COMPARATIVE EXAMPLE 1 | 87 | 2 | 97.7 |

This application claims priority to Japanese Patent Application No. 2009-21840 filed on February 2, 2009, the entire contents of which are incorporated herein by reference.

### Industrial Applicability

The present invention is applicable to fields involving immobilizing particles on an electrode, including the ceramic industry.

## Claims

1. A method for immobilizing particles (32) on a first electrode (14) formed on a substrate (12), comprising:
a forming step of forming a particle layer (30) at least on the first electrode (14); and
a subsequent immobilizing step of immobilizing the particle layer (30) by immersing the substrate (12) in a solution (40, 44) containing an electropolymerizable chemical while a counter electrode (39) is disposed opposite the first electrode (14) with the particle layer (30) formed on the first electrode (14) and applying a potential difference between the first electrode (14) and the counter electrode (39) to electropolymerize the chemical on the first electrode (14).

2. The method for immobilizing particles (32) according to Claim 1, wherein the particle layer (30) is formed on the first electrode (14) in the forming step by immersing the substrate (12) in a solution (44) containing the particles (32).

3. The method for immobilizing particles (32) according to Claim 1 or 2, wherein
the particle layer (30) is formed in the forming step by immersing the substrate (14) in a solution (44) containing the particles (32) and the electropolymerizable chemical; and
the particle layer (30) is immobilized in the immobilizing step by electropolymerizing the chemical on the first electrode (14) in the solution (44) containing the particles (32) and the electropolymerizable chemical.

4. The method for immobilizing particles (32) according to one of Claims 1 to 3, wherein
the particle layer (30) is formed on the first electrode (14) in the forming step by immersing and lifting the substrate (12) in and out of a solution (44) containing the particles (32) and the electropolymerizable chemical while the counter electrode (39) is disposed opposite the first electrode (14); and
the chemical is electropolymerized on the first electrode (14) in the immobilizing step by applying a potential difference between the first electrode (14) and the counter electrode (39) when the substrate (12) is lifted.

5. The method for immobilizing particles (32) according to one of Claims 1 to 4, comprising:
after the immobilizing step, a repolymerizing step of immersing the substrate (12) having the particles (32) immobilized thereon in a solution (40, 44) containing an electropolymerizable chemical and applying a potential difference between the first electrode (14) and the counter electrode (39) to electropolymerize the chemical on the first electrode (14).

6. A method for producing a particle-immobilized substrate (10) having particles (32) immobilized on a first electrode (14) formed on the substrate (12), comprising:
a forming step of forming a particle layer (30) at least on the first electrode (14); and
a subsequent immobilizing step of immobilizing the particle layer (30) by immersing the substrate (12) in a solution (40, 44) containing an electropolymerizable chemical while a counter electrode (39) is disposed opposite the first electrode (14) with the particle layer (30) formed on the first electrode (14) and applying a potential difference between the first electrode (14) and the counter electrode (39) to electropolymerize the chemical on the first electrode (14).

7. The method for producing a particle-immobilized substrate (10) according to Claim 6, wherein the particle layer (30) is formed on the first electrode (14) in the forming step by immersing the substrate (12) in a solution (44) containing the particles (32).

8. The method for producing a particle-immobilized substrate (10) according to Claim 6 or 7, wherein
the particle layer (30) is formed in the forming step by immersing the substrate (12) in a solution (44) containing the particles (32) and the electropolymerizable chemical; and
the particle layer (30) is immobilized in the immobilizing step by electropolymerizing the chemical on the first electrode (14) in the solution (44) containing the particles (32) and the electropolymerizable chemical.

9. The method for producing a particle-immobilized substrate (10) according to one of Claims 6 to 8, wherein
the particle layer (30) is formed on the first electrode (14) in the forming step by immersing and lifting the substrate (12) in and out of a solution (44) containing the particles (32) and the electropolymerizable chemical while the counter electrode (39) is disposed opposite the first electrode (14); and
the chemical is electropolymerized on the first electrode (14) in the immobilizing step by applying a potential difference between the first electrode (14) and the counter electrode (39) when the substrate (12) is lifted.

10. The method for producing a particle-immobilized substrate (10) according to one of Claims 6 to 9, comprising:
after the immobilizing step,
a reimmobilizing step of immersing the substrate (12) having the particles (32) immobilized thereon in a solution (40, 44) containing an electropolymerizable chemical and applying a potential difference between the first electrode (14) and the counter electrode (39) to electropolymerize the chemical on the first electrode (14).

## Patentansprüche

1. Verfahren zur Immobilisierung von Teilchen (32) auf einer ersten Elektrode (14), die auf einem Substrat (12) ausgebildet ist, umfassend:
einen Ausbildungsschritt des Ausbildens einer Teilchenschicht (30) zumindest auf der ersten Elektrode (14); und
einen anschließenden Immobilisierungsschritt der Immobilisierung der Teilchenschicht (30) durch Eintauchen des Substrats (12) in eine Lösung (40, 44), die eine elektropolymerisierbare Chemikalie umfasst, während eine Gegenelektrode (39) gegenüber der ersten Elektrode (14) angeordnet wird, wobei die Teilchenschicht (30) auf der ersten Elektrode (14) ausgebildet ist, und Anlegen einer Spannungsdifferenz zwischen der ersten Elektrode (14) und der Gegenelektrode (39), um die Chemikalie auf der ersten Elektrode (14) zu elektropolymerisieren.

2. Verfahren zur Immobilisierung von Teilchen (32) nach Anspruch 1, wobei die Teilchenschicht (30) im Ausbildungsschritt auf der ersten Elektrode (14) durch Eintauchen des Substrats (12) in eine Lösung (44), die die Teilchen (32) enthält, ausgebildet wird.

3. Verfahren zur Immobilisierung von Teilchen (32) nach Anspruch 1 oder 2, wobei
die Teilchenschicht (30) im Ausbildungsschritt durch Eintauchen des Substrats (12) in eine Lösung (44), die die Teilchen (32) und die elektropolymerisierbare Chemikalie enthält, ausgebildet wird; und wobei
die Teilchenschicht im Immobilisierungsschritt durch Elektropolymerisierung der Chemikalie auf der ersten Elektrode (14) in der Lösung (44) die die Teilchen (32) und die elektropolymerisierbare Chemikalie enthält, immobilisiert wird.

4. Verfahren zur Immobilisierung von Teilchen (32) nach einem der Ansprüche 1 bis 3, wobei
die Teilchenschicht (30) auf der ersten Elektrode (14) im Ausbildungsschritt ausgebildet wird, indem das Substrat (12) im Ausbildungsschritt in eine Lösung (44), die die Teilchen (32) und die elektropolymerisierbare Chemikalie enthält, getaucht und wieder aus dieser herausgehoben wird, während die Gegenelektrode (39) gegenüber der ersten Elektrode (14) angeordnet wird; und wobei
die Chemikalie im Immobilisierungsschritt auf der ersten Elektrode (14) elektropolymerisiert wird, indem eine Spannungsdifferenz zwischen der ersten Elektrode (14) und der Gegenelektrode (39) angelegt wird, wenn das Substrat (12) angehoben wird.

5. Verfahren zur Immobilisierung von Teilchen (32) nach einem der Ansprüche 1 bis 4, umfassend:
nach dem Immobilisierungsschritt einen Repolymerisierungsschritt des Eintauchens des Substrats (12) mit den darauf immobilisierten Teilchen (32) in eine Lösung (40, 44), die eine elektropolymerisierbare Chemikalie enthält, und Beaufschlagen einer Potenzialdifferenz zwischen der ersten Elektrode (14) und der Gegenelektrode (39), um die Chemikalie auf der ersten Elektrode (14) zu elektropolymerisieren.

6. Verfahren zum Herstellen eines Teilchen-immobilisierten Substrats (10) mit Teilchen (32), die auf einer ersten, auf dem Substrat (12) ausgebildeten Elektrode (14) immobilisiert sind, umfassend:
einen Ausbildungsschritt des Ausbildens einer Teilchenschicht (30) zumindest auf der ersten Elektrode (14); und
einen anschließenden Immobilisierungsschritt der Immobilisierung der Teilchenschicht (30) durch Eintauchen des Substrats (12) in eine Lösung (40, 44), die eine elektropolymerisierbare Chemikalie umfasst, während eine Gegenelektrode (39) gegenüber der ersten Elektrode (14) angeordnet wird, wobei die Teilchenschicht (30) auf der ersten Elektrode (14) ausgebildet ist, und Anlegen einer Potenzialdifferenz zwischen der ersten Elektrode (14) und der Gegenelektrode (39), um die Chemikalie auf der ersten Elektrode (14) zu elektropolymerisieren.

7. Verfahren zum Herstellen eines Teilchen-immobilisierten Substrats (10) nach Anspruch 6, wobei die Teilchenschicht (30) im Ausbildungsschritt auf der ersten Elektrode (14) durch Eintauchen des Substrats (12) in eine Lösung (44), die die Teilchen (32) enthält, ausgebildet wird.

8. Verfahren zum Herstellen eines Teilchen-immobilisierten Substrats (10) nach Anspruch 6 oder 7, wobei
die Teilchenschicht (30) im Ausbildungsschritt durch Eintauchen des Substrats (12) in eine Lösung (44), die die Teilchen (32) und die elektropolymerisierbare Chemikalie enthält, ausgebildet wird; und wobei
die Teilchenschicht (30) im Immobilisierungsschritt durch Elektropolymerisierung der Chemikalie auf der ersten Elektrode (14) in der Lösung (44) die die Teilchen (32) und die elektropolymerisierbare Chemikalie enthält, immobilisiert wird.

9. Verfahren zum Herstellen eines Teilchen-immobilisierten Substrats (10) nach einem der Ansprüche 6 bis 8, wobei
die Teilchenschicht (30) auf der ersten Elektrode (14) im Ausbildungsschritt ausgebildet wird, indem das Substrat (12) im Ausbildungsschritt in eine Lösung (44), die die Teilchen und die elektropolymerisierbare Chemikalie enthält, getaucht und wieder aus dieser herausgehoben wird, während die Gegenelektrode (39) gegenüber der ersten Elektrode (14) angeordnet wird; und wobei
die Chemikalie im Immobilisierungsschritt auf der ersten Elektrode (14) elektropolymerisiert wird, indem eine Potenzialdifferenz zwischen der ersten Elektrode (14) und der Gegenelektrode (39) angelegt wird, wenn das Substrat (12) angehoben wird.

10. Verfahren zum Herstellen eines Teilchen-immobilisierten Substrats (10) nach einem der Ansprüche 6 bis 9, umfassend:
nach dem Immobilisierungsschritt einen Reimmobilisierungsschritt des Eintauchens des Substrats (12) mit den darauf immobilisierten Teilchen (32) in eine Lösung (40, 44), die eine elektropolymerisierbare Chemikalie enthält, und Anlegen einer Potenzialdifferenz zwischen der ersten Elektrode (14) und der Gegenelektrode (39), um die Chemikalie auf der ersten Elektrode (14) zu elektropolymerisieren.

## Revendications

1. Procédé pour immobiliser des particules (32) sur une première électrode (14) formée sur un substrat (12), comprenant :
une étape de formation de formation d'une couche de particules (30) au moins sur la première électrode (14) ; et
une étape consécutive d'immobilisation d'immobilisation de la couche de particules (30) par immersion du substrat (12) dans une solution (40, 44) contenant une substance chimique électropolymérisable tandis qu'une contre-électrode (39) est disposée face à la première électrode (14) avec la couche de particules (30) formée sur la première électrode (14) et application d'une différence de potentiel entre la première électrode (14) et la contre-électrode (39) pour électropolymériser la substance chimique sur la première électrode (14).

2. Procédé pour immobiliser des particules (32) selon la revendication 1, dans lequel la couche de particules (30) est formée sur la première électrode (14) dans l'étape de formation par immersion du substrat (12) dans une solution (44) contenant les particules (32).

3. Procédé pour immobiliser des particules (32) selon la revendication 1 ou 2, dans lequel
la couche de particules (30) est formée dans l'étape de formation par immersion du substrat (14) dans une solution (44) contenant les particules (32) et la substance chimique électropolymérisable ; et
la couche de particules (30) est immobilisée dans l'étape d'immobilisation par électropolymérisation de la substance chimique sur la première électrode (14) dans la solution (44) contenant les particules (32) et la substance chimique électropolymérisable.

4. Procédé pour immobiliser des particules (32) selon une des revendications 1 à 3, dans lequel
la couche de particules (30) est formée sur la première électrode (14) dans l'étape de formation par immersion et levage du substrat (12) dans et hors d'une solution (44) contenant les particules (32) et la substance chimique électropolymérisable tandis que la contre-électrode (39) est disposée face à la première électrode (14) ; et
la substance chimique est électropolymérisée sur la première électrode (14) dans l'étape d'immobilisation par application d'une différence de potentiel entre la première électrode (14) et la contre-électrode (39) lorsque le substrat (12) est levé.

5. Procédé pour immobiliser des particules (32) selon l'une des revendications 1 à 4, comprenant :
après l'étape d'immobilisation, une étape de repolymérisation d'immersion du substrat (12) sur lequel les particules (32) sont immobilisées dans une solution (40, 44) contenant une substance chimique électropolymérisable et application d'une différence de potentiel entre la première électrode (14) et la contre-électrode (39) pour électropolymériser la substance chimique sur la première électrode (14).

6. Procédé pour produire un substrat à particules immobilisées (10) ayant des particules (32) immobilisées sur une première électrode (14) formée sur le substrat (12), comprenant :
une étape de formation de formation d'une couche de particules (30) au moins sur la première électrode (14) ; et
une étape consécutive d'immobilisation d'immobilisation de la couche de particules (30) par immersion du substrat (12) dans une solution (40, 44) contenant une substance chimique électropolymérisable tandis qu'une contre-électrode (39) est disposée face à la première électrode (14) avec la couche de particules (30) formée sur la première électrode (14) et application d'une différence de potentiel entre la première électrode (14) et la contre-électrode (39) pour électropolymériser la substance chimique sur la première électrode (14).

7. Procédé pour produire un substrat à particules immobilisées (10) selon la revendication 6, dans lequel la couche de particules (30) est formée sur la première électrode (14) dans l'étape de formation par immersion du substrat (12) dans une solution (44) contenant les particules (32).

8. Procédé pour produire un substrat à particules immobilisées (10) selon la revendication 6 ou 7, dans lequel
la couche de particules (30) est formée dans l'étape de formation par immersion du substrat (12) dans une solution (44) contenant les particules (32) et la substance chimique électropolymérisable ; et
la couche de particules (30) est immobilisée dans l'étape d'immobilisation par électropolymérisation de la substance chimique sur la première électrode (14) dans la solution (44) contenant les particules (32) et la substance chimique électropolymérisable.

9. Procédé pour produire un substrat à particules immobilisées (10) selon une des revendications 6 à 8, dans lequel
la couche de particules (30) est formée sur la première électrode (14) dans l'étape de formation par immersion et levage du substrat (12) dans et hors d'une solution (44) contenant les particules (32) et la substance chimique électropolymérisable tandis que la contre-électrode (39) est disposée face à la première électrode (14) ; et
la substance chimique est électropolymérisée sur la première électrode (14) dans l'étape d'immobilisation par application d'une différence de potentiel entre la première électrode (14) et la contre-électrode (39) lorsque le substrat (12) est levé.

10. Procédé pour produire un substrat à particules immobilisées (10) selon une des revendications 6 à 9, comprenant :
après l'étape d'immobilisation,
une étape de re-immobilisation d'immersion du substrat (12) sur lequel les particules (32) sont immobilisées dans une solution (40, 44) contenant une substance chimique électropolymérisable et application d'une différence de potentiel entre la première électrode (14) et la contre-électrode (39) pour électropolymériser la substance chimique sur la première électrode (14).
